# EUROPEAN PATENT SPECIFICATION

(11) **EP 2 403 427 B1**
(45) Date of publication and mention of the grant of the patent: **04.11.2015**
(21) Application number: 10707631.7
(22) Date of filing: 19.02.2010
(51) Int. Cl.: A61C 13/00, A61C 13/12, B23Q 3/06

(54) **BILLET**
ROHLING
EBAUCHE

(30) Priority: 19.02.2009 GB 0902814
(43) Date of publication of application: 11.01.2012
(73) Proprietor: Renishaw PLC, Wotton-Under-Edge Gloucestershire GL12 8JR (GB)
(72) Inventor: McMURTRY, David, Roberts, Gloucestershire GL11 6AT (GB); FORMAN, Mark, Stephen, James, Gloucestershire GL12 7EZ (GB)
(74) Representative: Rolfe, Edward William
(86) International application number: PCT/GB2010/000289
(87) International publication number: WO 2010/094922

(56) References cited:
- EP-A1- 1 767 301
- WO-A1-02/45614
- DE-A1-102006 027 397
- DE-U1- 20 316 004
- US-A1- 2009 023 112

## Description

The present invention relates to a billet for use in the manufacture of dental parts.

To facilitate the manufacture of parts from a billet, for example by milling, a number of factors are important such as, the material from which the billet is composed; the size, shape and complexity of the parts to be manufactured; the cost of the material and in particular, any waste from the billet. In addition to these considerations, factors relating to manufacturing location can also influence the size and shape of a billet. Finally, the manner of securing the billet in a holder can impact the manufacturing process.

Ceramic materials are useful in certain applications. In the dental industry where the aesthetics of a replacement tooth or teeth are an important consideration, ceramic materials are used, however there are manufacturing considerations that were not encountered when metal replacements were used. If the ceramic is fully sintered prior to milling or machining, there is the problem that the material is hard to machine and the process is time consuming; if the ceramic is partly sintered prior to milling i.e. in a brown state, then the milling is easier, but one must take account of the shrinkage that will occur when sintering the ceramic to final density so the part is milled oversized.

In the dental industry, the parts are complicated and relatively small, in addition both an outer and inner surface must be produced. Previously, it has been known to press one surface, say the inner, and mill only the outer surface as then one only needs to access one face of the part with a tool. This requires a number of different pieces of equipment and stocks of the various materials used in the pressing process.

In addition, it is known to use a machine which has a plurality of tools disposed around the billet to enable access from a number of orientations however such a machine is large and the use of a multitude of tools requires a multitude of motors which increases the complexity and cost of the machine.

DE20316004 describes a metallic blank having the shape of a flat circular disk which is provided with a peripheral groove and a notch running parallel to its axis. The groove acts to reproducibly establish the axial position of the disk and the notch acts to reproducibly establish the angle position of the disk with respect to its axis.

According to the present invention there is provided a billet for being retained within a billet holder, wherein the billet is a dental billet from which one or more dental prostheses may be machined, said billet having at least one orientation feature and at least one locating feature, wherein the at least one locating feature provides rotational asymmetry to the billet and is thereby also an orientation feature, wherein the at least one orientation feature makes the billet shape asymmetric about all rotational axes, and wherein the billet has essentially a D-shape with the at least one locating feature comprising a cut-away corner or a chamfer to a corner of the D-shaped billet.

The one or more orientation features limit the number of orientations in which the billet may be inserted into a billet holder to a single orientation. The billet does not have rotational symmetry about any axis, i.e. it is rotationally asymmetric about all axes.

The use of an asymmetric billet means that the billet can only be inserted within a billet holder in one orientation, thus an operator or machine program knows where the billet and more importantly where the boundary of the billet is in relation to a tool when the billet is correctly inserted into a machine working envelope.

The one or more orientation features may comprise any feature which provides rotationally asymmetry to the billet. The one or more orientation features may be machined as part of the billet. The one or more orientation features may be fixed to the billet. The one or more orientation features may be formed in the billet or added to the billet, or may be a combination of both. The one or more orientation features may comprise, for example, a slot, a hole, or a protrusion, or a plurality of such features.

The billet is also provided with at least one locating feature. Said locating features can be similar or different in design. One example of a locating feature is a groove located around the perimeter, or a portion of the perimeter of the billet. Where the billet is a D-shaped billet a locating feature may be a groove located around one or both edges of the D-shaped billet.

The locating feature may prevent the billet from falling out of the billet holder when the billet holder is in an open configuration. For example the locating feature on the billet may comprise at least one groove in the billet, or at least one slot in the billet. The locating feature may comprise material removed from the billet so that it sits against an edge of the billet holder. In this way relative movement of the billet and billet holder is restricted, or substantially prevented.

The billet may comprise 'pre-sintered zirconia'. 'Pre-sintered zirconia' is also known as 'brown' or 'bisque-fired' or 'biscuit-fired' zirconia. The billet may comprise, for example, polymer, wax, metal, or other ceramic material. The billet may comprise a combination of such materials. For example, the billet may comprise alumina, mixtures of alumina and zirconia, green (as-pressed) zirconia (still with the binder in), or fully sintered or HIPed (hot isostatically pressed) zirconia. The billet could be made of any material which is to be machined.

Also disclosed is a billet holder comprising:
a base; and
a frame;
whereby the base and frame are connectable, and when connected are relatively moveable between an open configuration when a billet having at least one orientation feature may be inserted or removed from the billet holder and, a closed configuration when the billet is retained within the billet holder,
the billet holder further comprising at least one orientation feature for cooperation with the at least one orientation feature on the billet to ensure that the billet can only be inserted within the billet holder in one orientation, the at least one orientation feature on the billet comprising a cut away section from the billet and making the billet shape asymmetric about all rotational axes.

The billet may be retained within a retaining cavity of the billet holder. The base and frame may be connectable by a joint. The joint may enable movement of the base and frame between the open and closed configuration. The joint may comprise a plurality of joints.

The joint may comprise a pivot joint, for example. In one example the base and frame may be connected by a four bar linkage system. Such a linkage system will be known to the skilled person.

The base and frame may be connected by a slide. Other ways of moveably connecting two members will be known to the skilled person.

For a milling procedure, the billet holder is attached to a milling machine. An example of a suitable milling machine and manner of attachment is described in our co-pending application GB0803666.7 where an index frame including index features is provided. Index features may provide attachment between the billet holder and the index frame and the billet holder can be reorientated with respect to the milling machine.

The use of a billet holder as described may enable control of billet insertion and removal by an operator both if this is carried out whilst a billet holder is secured to the milling machine or if removed from the milling machine first. In particular, the use of a pivoting billet holder may enable control of billet insertion and removal by an operator both if this is carried out whilst a billet holder is secured to the milling machine or if removed from the milling machine first.

The base of the billet holder may comprise a base aperture through which a billet held within the billet holder may be accessed. For example a tool from a machine may be able to machine a billet held in the billet holder through the base aperture.

The base aperture may be sized to provide access to a substantial portion of a surface of a billet held within the billet holder. The base aperture may be configured to allow access to substantially all machinable portions of a surface of a billet held within the billet holder. This can prevent material wastage by allowing as much as possible of the billet to be machined into a part or parts. The base aperture may be shaped to complement the shape of the face of a billet as described hereinbefore.

The base aperture of the billet holder may be adapted to receive a locating feature of a billet. By receiving a locating feature of a billet the billet holder may secure the billet in a known or defined position within the billet holder.

In a preferred example, the base forms a slide along which a billet may move when being inserted into or removed from the billet holder.

The base may comprise at least one lip feature. The base may comprise a plurality of lip features, such as two, three or four lip features. Said at least one lip feature may provide a stop for supporting a billet when held inside the billet holder, in particular when the billet holder is in the open configuration, such that the billet does not slide out of the billet holder under gravity. The base may comprise at least one lip feature for retaining a billet when placed inside the billet holder in the open configuration.

The base may form a ring, for example, or it may be substantially U-shaped, or it may comprise two separate arms connected to the frame.

The frame of the billet holder may comprise a frame aperture through which a billet held in the billet holder may be accessed. As with the base aperture, a tool from a machine may be able to machine a billet held in the billet holder through the base aperture.

The frame aperture may be sized to provide access to a substantial portion of a surface of a billet held within the billet holder. The frame aperture may be configured to allow access to substantially all machinable portions of a surface or face of a billet held within the billet holder. This can prevent material wastage by allowing as much as possible of the billet to be machined into a part or parts. The frame aperture may be shaped to complement the shape of the face of a billet as described hereinbefore.

The frame aperture of the billet holder may be adapted to receive a locating feature of a billet. By receiving a locating feature of a billet the billet holder may secure the billet in a known or defined position within the billet holder.

Preferably, the billet holder includes at least one retaining feature for retaining a billet within the billet holder. This enables the retention of the billet within a billet holder without extra securing aids such as glue or screws such as grub screws which impact the usable area of a billet and sometimes the integrity of the billet. The retaining feature may be at least one finger, tab, pin, pad, or ledge for example.

The at least one retaining feature may be provided on at least one of the base and the frame. The at least one retaining feature may protrude from the base into the base aperture. The at least one retaining feature may protrude from the frame into the frame aperture. Preferably at least one retaining feature is provided on each of the base and the frame.

Advantageously the retaining features are arranged such that in use they contact the face of the billet over a small area, compared to the area of the face of the billet. This is so as to maximise the area of the surface of the billet that can be machined, whilst also providing sufficient contact to hold the billet in place. Another consideration is that some billet should remain once the machining of parts has been completed such that the machined parts can be held together. Preferably the ratio of clamping area to machinable area is approximately 8:1 where the billet has a surface area of approximately 6000mm². However, it will be understood that the preferred ratio of clamping area to machinable area may be different for different sized billets.

Preferably the at least one retaining feature on the base is cooperable with the at least one retaining feature on the frame to apply a clamping force to the billet to retain the billet within the billet holder. The billet may be held by the retaining features of the billet holder tightly enough to resist any cutting and dynamic forces placed on it by machining. The retaining features may be arranged so as to apply forces to the billet when held within the billet holder such that the billet cannot rock within the billet holder.

Preferably the retaining features are arranged such that a clamping force is applied at an edge of the billet. Preferably the retaining features are arranged such that a clamping force is applied to the billet through the thickness of the billet. The retaining features may be arranged such that in use the area of billet clamped between the retaining features will not be removed by machining. In this way the billet may retain stiffness between the retaining features and thus may not be cracked by the clamping force.

As the billet is machined material is removed from the billet, this generally leads to a reduction in the stiffness of the billet across the width of the billet. Thus clamping across the width of the billet can lead to cracks in the billet.

In a preferred example, the billet holder is provided with a closure for securing the billet holder when in the closed configuration. Where the closure is pivotably mounted to the base, advantageously the closure is also provided with a stop which limits the pivoting motion and provides a defined maximum extent of the pivoting motion. The stop may be provided by the frame itself. The closure may be provided with a stop which limits the motion of the closure to the billet holder and provides a defined maximum extent of the motion

More advantageously the closure is manually actuatable, without the need for additional fixings. This enables the user to easily secure the billet holder in the closed position without the need for tools and fixings.

The closure may be designed to be flush with the base and frame when in the closed configuration, so that the closure does not interfere with milling process when closed.

The closure may be, for example, substantially U-shaped, or a closed ring. The closure may be provided on at least one of the base or the frame. Component parts of the closure may be provided on each of the base and the frame.

The closure may be arranged such that when in the closed configuration the closure applies a force to the retaining features of the billet holder. Said retaining features may then apply force to a billet held within the billet holder.

The billet holder may include at least one locating feature. The billet holder may include locating features. Said locating features may be provided on the billet holder instead of or in addition to any locating features provided on the billet. An example of a billet holder locating feature is one or more fingers disposed around the base, frame and/or closure (if provided) adapted to support the billet in the billet holder. A billet holder locating feature may be, for example, a ledge provided on the base, frame and/or closure (if provided) adapted to support the billet in the billet holder. Combinations of locating features may be provided on the billet holder.

The locating feature may be at least one protrusion on the billet holder. A billet may rest against said protrusion. The locating feature may protrude from at least one of the base or frame. The locating feature may protrude into the base or frame aperture. The locating feature may protrude between the base and frame, into the retaining cavity of the billet holder. The locating feature may be a plurality of protrusions on the billet holder, against which a billet may rest. Said protrusions may be pins, or tabs, screwheads or fingers, for example. The locating feature may comprise, for example a chamfered corner of at least one of the base and frame apertures. The chamfered corner, for example, may be a chamfered corner of the retaining cavity of the billet holder.

The locating feature may be a retaining feature, though this is not necessary. The locating feature on the billet holder may be cooperable with a locating feature on a billet, such that the billet can be located within the billet holder.

The at least one orientation feature restricts the number of orientations in which a billet may be received in the billet holder to a single orientation. The at least one orientation feature complements the one or more orientation features on a billet as described hereinbefore.

For example, the at least one orientation feature may make at least one of the base and frame apertures asymmetric. The at least one orientation feature may make the retaining cavity of the billet holder asymmetric. At least one of the base aperture, frame aperture and retaining cavity of the billet holder may be shaped to complement the shape of a billet as described hereinbefore.

Also described is a method of manufacture of an article from a billet comprising the steps of:
having a milling machine which includes a tool and a relatively movable part to which a billet holder can be attached;
providing a billet holder said billet holder comprising a base and a frame, whereby the base and frame are connected and relatively moveable between an open configuration when a billet may be inserted or removed from the billet holder and, a closed configuration when a billet is retained within the billet holder, wherein the billet holder is in the open configuration;
inserting a billet into the open billet holder;
moving the billet holder from an open configuration to a closed configuration; and
securing the a billet within the billet holder; wherein, the billet holder can be attached to the relatively movable part of the milling machine either before or after insertion of the billet into the billet holder.

Also described is a method of manufacture of an article from a billet comprising the steps of:
having a milling machine which includes a tool and a relatively movable part to which a billet holder can be attached;
providing a billet holder said billet holder comprising a base; a frame; and, a pivot whereby the base and frame are connected via the pivot and are moveable between open and closed configurations, wherein the billet holder is in an open configuration;
inserting a billet into the open billet holder;
pivoting the billet holder from an open configuration to a closed configuration; and
securing the a billet within the billet holder; wherein, the billet holder can be attached to the relatively movable part of the milling machine either before or after insertion of the billet into the billet holder.

Preferably, the relatively movable part is an indexer which is rotatable with respect to the milling machine. The indexer can be moved in two or three axes with respect to the tool, these axes being x,y, and optionally z. In a preferred example the axes are orthogonal to each other. This enables different aspects of a billet to be presented to the tool. Advantages of such an arrangement are that the machine is simplified as one tool can be used to mill different planes of the billet and the size of the machine can be reduced.

Also described is a method of manufacture of an article from a billet comprising the steps of:
having a milling machine which includes a tool and a relatively movable part to which a billet holder can be attached;
providing a billet holder said billet holder comprising a first member and a second member relatively moveable between a first configuration arranged such that a billet may be inserted or removed from the billet holder, and second configuration arranged such that a billet is retained within the billet holder, wherein the billet holder is in the first configuration;
inserting a billet into the open billet holder;
moving the billet holder from an open configuration to a closed configuration; and
securing the a billet within the billet holder; wherein, the billet holder can be attached to the relatively movable part of the milling machine either before or after insertion of the billet into the billet holder.

In each of the three above-described methods of manufacture, the billet has at least one orientation feature and the billet holder has at least one orientation feature for cooperation with the at least one orientation feature on the billet to ensure that the billet can only be inserted within the billet holder in one orientation, the at least one orientation feature on the billet comprising a cut away section from the billet and making the billet shape asymmetric about all rotational axes.

Further described is a billet holder comprising:
a base;
a frame; and,
a pivot whereby the base and frame are connected via the pivot, wherein the pivot enables movement of the base and frame between an open configuration when a billet may be inserted or removed from the billet holder and, a closed configuration when a billet is retained within the billet holder.

Further described is a billet holder comprising:
a first member; and
a second member;
the first and second members being relatively moveable between a first configuration arranged such that a billet may be inserted or removed from the billet holder, and second configuration arranged such that a billet is retained within the billet holder.

The first configuration may be an open configuration. The second configuration may be a closed configuration. The first member may comprise a frame. The second member may comprise a base.

The first and second members may be connected. Where the first and second members are connected they may be connected via a joint. The joint may enable movement of the base and frame between an open configuration when a billet may be inserted or removed from the billet holder and, a closed configuration when a billet is retained within the billet holder.

The joint may comprise a pivot joint. The joint may comprise a plurality of joints, such as, for example, a plurality of pivot joints. In one example the base and frame may be connected by a four bar linkage system. Such a system will be known to the skilled person.

Alternatively, the first and second members may be separate but attachable to one another. In this case, preferably the first and second members are provided with fixtures for fixing to one another. Separate fixing parts may be used, but these are not preferable as they increase the number of parts required and decrease the ease of use for the user.

The invention which relates to a billet will now be described by example, with reference to the accompanying drawings, of which:
Figure 1a shows isometrically a first billet holder in an open configuration;
Figure 1b shows isometrically a pivot joint of a billet holder;
Figure 2 shows isometrically the first billet holder in a closed configuration;
Figure 3 shows a billet according to the invention;
Figure 4a shows a billet partially inserted into the first billet holder;
Figure 4b shows an orientation feature of a billet cooperating with a correspondingly shaped portion of the first billet holder;
Figure 5 shows isometrically a second billet holder in an open configuration;
Figure 6 shows a billet partially inserted into the second billet holder;
Figure 7 shows isometrically a third billet holder in an open configuration;
Figure 8 shows a billet partially inserted into the third billet holder; and
Figure 9 shows a milling machine utilising a billet holder and billet according to the invention.

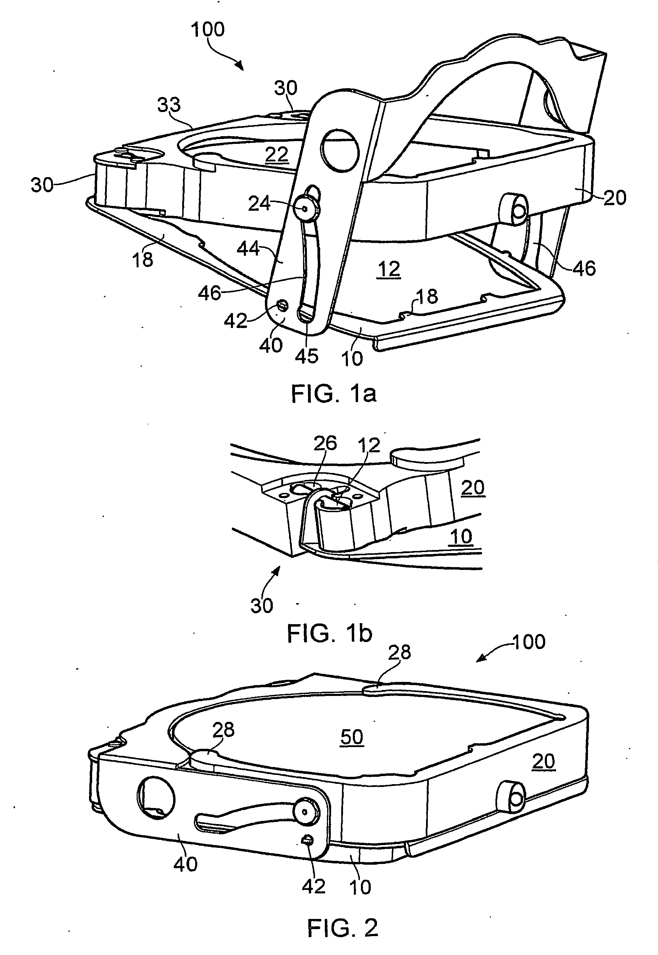

Figure 1a shows a billet holder 100 having a base 10 and a frame 20. The base 10 and frame 20 are connected via a pivot joint 30. A closure 40 is also provided which links the base 10 and the frame 20 and provides a limit to the pivot angle between the base 10 and the frame 20. The base and frame are generally allowed to pivot between an angle of 0 and 18°, anything up to around 80° can be used. However as the pivot angle is increased, the vertical working volume of the machine is increased and so the size of the machine is increased which is undesirable in certain circumstances so a smaller pivot angle is preferred. In a preferred example the pivot angle is between about 0 to 25°. The pivot angle may be between about 0 and 16°. Obviously the pivot angle is a function of the thickness of the billet. In this example a pivot angle of around 18° is suitable for a billet thickness of 20mm.

In this example, the base 10 is provided with an aperture 12 which provides access to a tool on one side of a billet, when located within the billet holder and within a milling machine. The frame 20 has a second aperture 22 which gives access to a tool on a second side of a billet when located in the billet holder. The apertures providing access to the first and second sides of a billet are preferably of substantially similar dimensions and configurations. In addition, the apertures preferably provide minimal overlap between a billet and the base and frame of the billet holder. This maximises utilisation of the material of a billet for machining and thus minimises waste.

Supporting ledges or fingers 18 are provided on the base 10 to support a first side of the billet.

The closure 40 is generally U-shaped and is pivotally fixed to the base 10 at locations near the ends of each arm 44 of the U by a pivot fixture 42. A slot 46 is provided along the length of each arm 44 which cooperates with a lug 24 on frame 20. When the lug 24 is at or near the end of the slot 46 which is distal to the pivot fixture 42, and thus the base 10, the billet holder is in the open configuration (as shown). In this configuration, the closure 40 is angled with respect to the frame 20 and base 10. In this example the closure 40 is approximately perpendicular to the base 10. When the lug 24 is moved along the slot 46, the billet holder gradually shuts; said shut configuration is shown in Figure 2. As the lug 24 approaches the end of slot 46 a clamping force is applied to a billet held within the billet holder via fingers 18 on the base 10 and fingers 28 on frame 20. When lug 24 reaches the end of slot 46 it drops into a detent 45, holding the closure 40 closed and billet clamped in place.

Referring now to Figure 1b, the pivot joint 30 includes a pin 12 which is secured to the base 10. The pin 12 sits within an aperture 26 in the frame 20 and enables the base to rotate about an axis defined by the length of the pin with respect to the aperture 26 to provide the pivoting motion. Pivot joints 30 are provided on two neighbouring corners of the billet holder 100 such that the base 10 and frame 20 of the billet holder 100 remain in contact along one side, the pivot side 33, and are moveable together and apart on the side of the base 10 and frame 20 distal the pivot joints 30.

Referring now to Figure 2, as the billet holder 100 is shut and contains a billet 50, the closure 40 swings from its' open configuration about the pivot fixing 42 of the base 10 until it reaches the closed configuration where it lies in substantially the same plane as the frame and preferably flush thereto. Thus, when the billet holder is closed, the closure 40 does not impede the milling of a billet held within the billet holder.

The frame 20 provides further fingers or ledges 28 for supporting a second side of the billet.

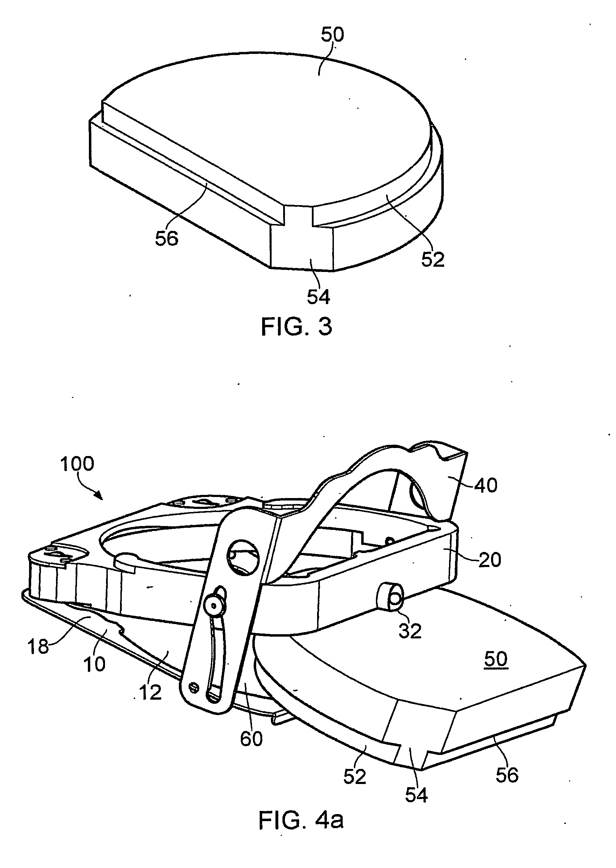

Figure 3 shows a billet 50 adapted to be secured within a billet holder. The billet is essentially D-shaped and has a groove 52 around the edge of one face, the groove having an upper surface 56. The billet has a chamfered edge or corner cut away 54, thus shape of the billet 50 is designed so that it can only be inserted into the billet holder in one orientation. In addition, the billet is designed to be held within the billet holder without the use of glue or a fixture. The upper surface 56 of the groove 52 provides a ledge which rests against a corresponding part of the billet holder.

If the billet is pre-sintered or brown ceramic material, the use of a fixture such as a grub screw can cause cracking or weakness within the billet localised around the fixture. In these cases as well as when glue is used, a region of the billet becomes unusable because the milled part may be contaminated with glue or rendered unusable due to a crack within it. Hence an advantage of a billet according to the invention is that the usable area of the billet is maximised. This is particularly advantageous when a number of parts are to be milled out of one billet as the number of parts is maximised and waste material minimised.

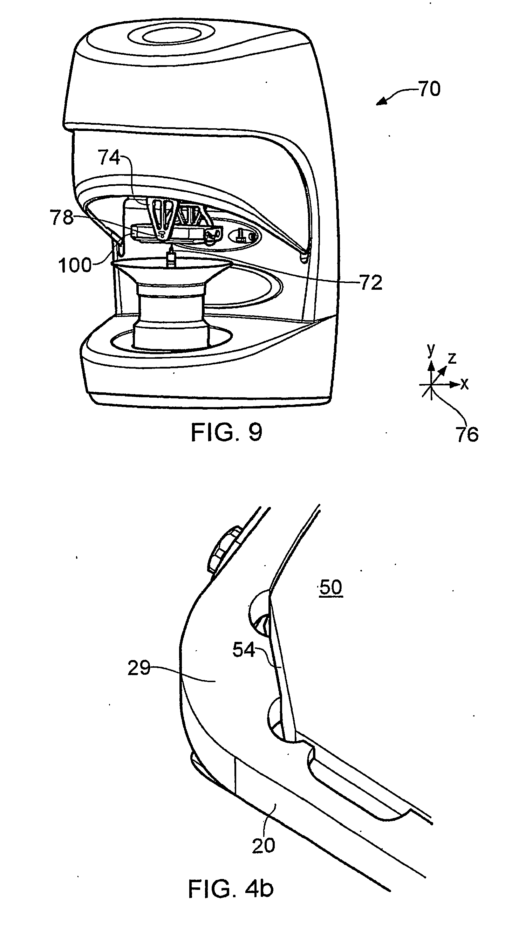

Figure 4a shows a billet holder 100 with a partially inserted billet 50. The billet holder is in an open configuration thus, the closure 40 is at an angle or non-parallel to the base 10. In this example the rounded side of the D shaped billet 50 is inserted first with the chamfered or cut away corner 54 matching a corresponding protrusion 29 on the frame 20 of the billet holder 100 as shown in Figure 4b.

The billet 50 slides into the opening 60 between the base 10 and the frame 20 of the billet holder. The groove 52 of the billet 50 is slightly smaller than the aperture 12 of the base 10 so when the billet insertion process is complete, the upper surface 56 of the groove 52 (see also Figure 3) rests on the fingers 18 of the base 10. Thus, the upper surface 56 of the groove 52 supports the billet 50 within the billet holder.

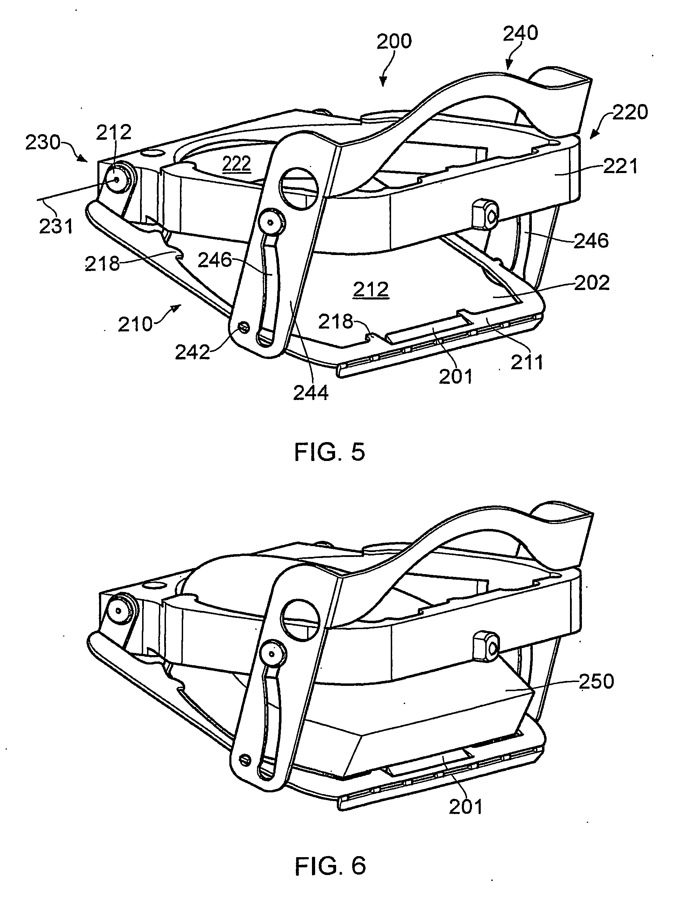

Figure 5 shows isometrically a second billet holder 200 in an open configuration. The description with reference to figure 1a applies to the second billet holder 200, figure 5 is numbered such that part numbers of the second billet holder 200 correspond to part numbers of the first billet holder 100, for example, the base 10 of figure 1a corresponds to the base 210 of figure 5, and the frame 20 of figure 1a corresponds to the frame 220 of figure 5. The second billet holder 200 further comprises a lip 201 on the base 210.

When the billet holder 200 is in the open position, as shown in figure 5, a mouth 202 is defined by a first side 211 of the base 210 and a first side 221 of the frame 220, said sides distal the pivot side 233 that joints the frame 20 and the base 10, and the arms 244 of the closure 240. A billet may be received in the billet holder 200 through the mouth 202. The lip 201 is positioned in the mouth 202 of the billet holder 200, protruding from the first side 211 of the base 210 towards the first side 321 of the frame 220. When a billet is inserted into the billet holder the lip 201 prevents the billet from sliding back out of the billet holder 200. This is particularly useful where the billet is a solid block without any groove or other feature for engaging the billet holder 200.

The pivot joint 230 includes a pin 212 which is secured to the base 210 and the side of the frame 220. The pin 212 sits within an aperture (not shown) in the frame 220 and enables the base 210 to rotate about an axis 231 defined by the length of the pin 212 with respect to the aperture to provide the pivoting motion.

Figure 6 shows a billet 250 partially inserted into the second billet holder 200. As the billet 250 does not have a groove, the edges of the main body of the billet 250 contact the fingers 208 of the base 210 to hold the billet 250 within the billet holder 200. As can be seen, once the billet 250 has been pushed over the lip 201 the lip 201 prevents the billet 250 from sliding back out of the billet holder 200.

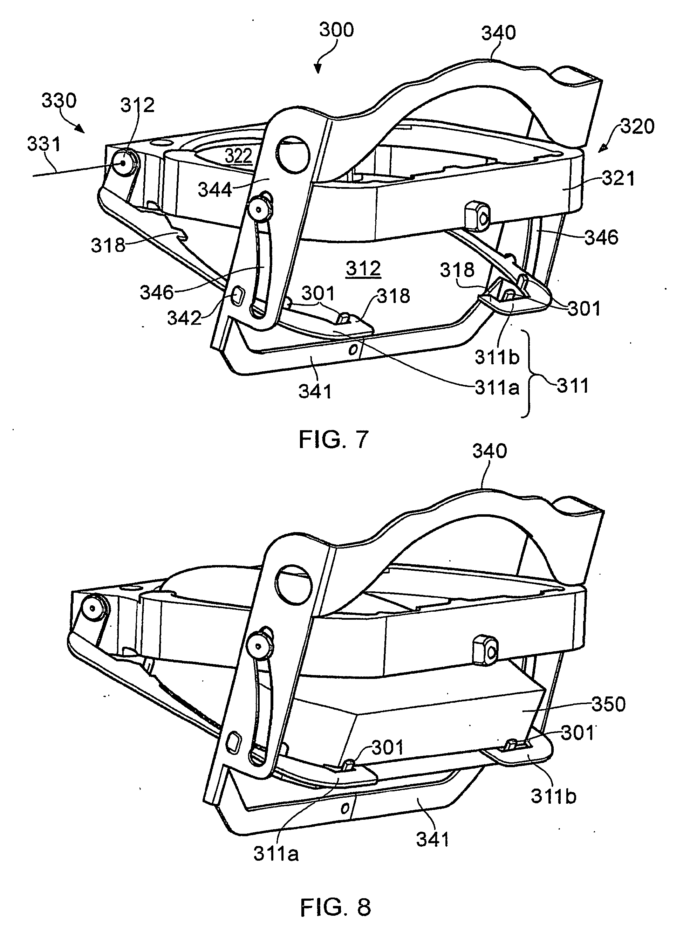

Figure 7 shows isometrically a third billet holder 300 in an open configuration. As for the second billet holder 200, the description with reference to figure 1 a generally applies to the third billet holder 300, and figure 6 is numbered such that part numbers of the third billet holder 300 correspond to part numbers of the first billet holder 100. The third billet holder 300 however has a different closure and base to the other billet holders described.

As with the first and second billet holders, when the third billet holder 300 is in the open position a mouth 302 is defined by a first side 311 of the base 310 and a first side 321 of the frame 320, said sides distal the pivot side 333 that joints the frame 320 and the base 310, and the arms 344 of the closure 340. A billet may be received in the billet holder 300 through the mouth 302. In the third billet holder 300 the first side 311 of the base 310 is not continuous. The first side 311 of the base 310 has first and second portions 311a and 311b extending towards each other, these two portions 311 a,b do not meet, such that there is a gap 311 c in the first side 311 of the base. This gap 311c makes removal of the billet easier for the user. The gap 311 c enables the user to grasp the billet on its upper and lower faces and remain in contact with the faces of the billet as the user removes the billet from the billet holder 300.

The closure 340 of the third billet holder 300 is not generally U-shaped, as the closure of the first 100 and second 200 billet holders described is, but is more generally rectangular. The closure 340 of the third billet holder 300 loops around the first sides 311, 321 of the base 310 and frame 320 of the billet holder 300. A first side 341 of the generally rectangular closure 340 which runs substantially parallel to the first side 311 of the base 310 may be used as a lever to move the closure 340 from the open position to the closed position. When in the closed position the first side 341 of the generally rectangular closure 340 abuts the first side 311 of the base 310 and fills the gap between the two portions 311a,b of the first side 311 of the base 310. When the closure is in the closed position the first side 341 of the closure 340 applies a force to the two portions 311 a,b of the base 310 and thus forces the fingers 318 of the base against a billet held in the billet holder.

Lips 301 are positioned in the mouth 302 of the billet holder 300, protruding from the portions 311 a,b of the first side 311 of the base 310 towards the first side 321 of the frame 220. When a billet is inserted into the billet holder the lips 301 prevent the billet from sliding back out of the billet holder 300. Again, this is particularly useful where the billet is a solid block without any groove or other feature for engaging the billet holder 300.

Figure 8 shows a billet 350 partially inserted into the third billet holder 300. Again, as the billet 350 does not have a groove, the edges of the main body of the billet 350 contact the fingers 318 of the base 310 to hold the billet 350 within the billet holder 300. As can be seen, once the billet 350 has been pushed over the lip fingers 301, the lip fingers 301 prevent the billet 350 from sliding back out of the billet holder 300.

Figure 9 shows a milling machine 70 suitable for use with a billet holder 100 and billet 50 of the present invention. The milling machine 70 is a table top machine and includes a tool 72 for milling material from the billet; in this example the tool 72 is relatively fixed. An indexer 74, movable in three orthogonal directions 76 with respect to the tool 72, retains a billet holder 100. The indexer 74 is rotatable about a pivot 78 so that different aspects of the billet 50 held within the billet holder 100 can be presented to the tool 72 for milling.

The pivot 78 provides the axis of rotation of the indexer with respect to the milling machine and thus tool and is additionally the contact between the indexer and the billet holder. In this example, the indexer is provided with a recess (not shown) which cooperates with a protrusion 32 provided on the billet holder (see Figure 4a). Two such recess and protrusion pairs are provided and the locus between them provides the axis of rotation.

In use, there are two ways to effect a milling procedure. In a first method, a billet is inserted within a billet holder remote from the milling machine. The billet holder is then connected to the indexer and rotated to an appropriate orientation for the start of a milling procedure.

In a second method, the billet holder remains within the working envelope of the machine, attached to the indexer whilst a billet is inserted or removed. The closure is opened and the action of opening causes one end of the base of the billet holder to drop with respect to the frame like a yawning mouth. The other end of the base is attached at the pivot to the frame and via this to the indexer. A billet is lifted out of the frame and a fresh billet inserted and held in position by the frame whilst pressure is applied by hand to the closure to close it. This causes the base to pivot back to the closed configuration.

The second method has a number of advantages. Firstly, as the billet holder remains attached to the indexer the orientation of the billet holder and thus a billet contained therein is known. There is no need for an operator or sensor to inform a milling program of the orientation or to double check and confirm the orientation. This is important as the billet is asymmetric and if it were the wrong way round the holder could be milled instead of the billet. The removal and insertion process of a billet is more controlled as both hands can be used to manipulate the billet until it is in a position ready for closure whereas the first method requires one hand to hold or steady the billet holder.

A milling procedure is started by the insertion of a billet by either the first or second method described above. The milling machine includes a milling software program which generates a cutting path for the tool in order to produce a part, for example a bridge framework, from coordinate data provided. The coordinate data may have been obtained by scanning a model of the bridge framework required.

A first side of the billet is machined. The configuration shown is advantageous as having the tool underneath the billet means that the removal of any dust produced during the milling process is assisted by gravity. However, the reverse configuration, where the tool is vertically above the billet is viable but more extraction may need to be provided. In addition, the tool may be relatively movable and the billet relatively fixed in either of the abovementioned configurations.

Once a first side of the billet is machined then either the billet holder can be rotated using the indexer to present the other face of the billet to the tool for machining; or alternatively, a first side of another part could be machined. The whole surface or just part of the first side of the billet can be machined before it is rotated with respect to the tool.

When the billet holder is inverted to present a second side of the billet to the tool, the billet is supported using different locating features. The second side of the part is machined. It is prudent to leave some retaining webs that attach the part to the billet which are removed manually later. There are two reasons for doing this, firstly it enables easy identification of the part and secondly if the part dropped from the billet it could be damaged or misidentified.

In order to minimise waste, it has been found to be advantageous to have two or more thicknesses of billet for milling dental parts, such as 16 and 20 mm thick. In addition, 14mm and 25mm thick billets have been found to be useful. Obviously more thicknesses could be used but this adds complication to the process as a whole range of different billets would need to be manufactured and stocked and similar thicknesses could be confused by an operator. Another technique for minimising waste is shown in European patent EP1613237 where a billet is used to manufacture more than one part, commonly called nesting.

As well as ceramics, the billets may be made from other materials that are commonly used in the dental industry such as wax, metals such as titanium, polymers, and glasses.

## Claims

1. A billet (50) for being retained within a billet holder (100), wherein the billet is a dental billet from which one or more dental prostheses may be machined, said billet (50) having at least one orientation feature and at least one locating feature (52, 54), wherein the at least one locating feature (52, 54) provides rotational asymmetry to the billet and is thereby also an orientation feature, wherein the at least one orientation feature (52, 54) makes the billet shape asymmetric about all rotational axes, and wherein the billet has essentially a D-shape with the at least one locating feature comprising a cut-away corner or a chamfer to a corner of the D-shaped billet.

2. A billet according to claim 1, comprising pre-sintered zirconia.

3. A billet according to claim 1 or 2, wherein the at least one orientation feature comprises at least one of a slot, a hole, or a protrusion.

4. A billet according to claim 1, 2 or 3, wherein the at least one locating feature comprises a groove located around at least a portion of the perimeter of the billet.

## Patentansprüche

1. Ein Rohling (50) zur Sicherung in einer Rohlinghalterung (100), wobei der Rohling ein Dentalrohling ist, aus dem eine oder mehrere Zahnprothesen herausgearbeitet werden können. Hierbei weist der besagte Rohling (50) mindestens ein Ausrichtungsmerkmal und mindestens ein Zentriermerkmal (52, 54) auf, wobei mindestens ein Zentriermerkmal (52, 54) eine Rotationsasymmetrie zum Rohling darbietet und somit gleichzeitig ein Ausrichtungsmerkmal ist, wobei mindestens ein Ausrichtungsmerkmal (52, 54) die Rohlingform asymmetrisch zu allen Drehachsen erscheinen lässt und wobei der Rohling grundlegend eine D-Form mit mindestens einem Zentriermerkmal bestehend aus einer abgeschnittenen Ecke oder einer Abschrägung in Bezug auf eine Ecke des D-förmigen Rohlings annimmt.

2. Ein Rohling gemäß Anspruch 1, bestehend aus vorgesintertem Zirkoniumdioxid.

3. Ein Rohling gemäß Anspruch 1 oder 2, wobei mindestens ein Ausrichtungsmerkmal aus mindestens einem Schlitz, einem Loch oder einem Überstand besteht.

4. Ein Rohling gemäß Anspruch 1, 2 oder 3, wobei mindestens ein Zentriermerkmal aus einer Rille um mindestens einen Teil des Umfangs des Rohlings besteht.

## Revendications

1. Billette (50) prévue pour être tenue dans un support de billette (100), dans laquelle la billette est une billette à usage dentaire à partir de laquelle une ou plusieurs prothèses dentaires peuvent être usinées, ladite billette (50) ayant au moins une entité d'orientation et au moins une entité de localisation (52, 54), dans laquelle la ou les entités de localisation (52, 54) confèrent une asymétrie de rotation à la billette et constituent aussi de ce fait une entité d'orientation, dans laquelle la ou les entités d'orientation (52, 54) rendent la forme de la billette asymétrique sur tous les axes de rotation, et dans laquelle la billette a sensiblement une forme de D avec au moins une entité de localisation comprenant un coin découpé ou un chanfrein d'un coin de la billette en forme de D.

2. Billette selon la revendication 1 constituée de zircone pré-fritté.

3. Billette selon la revendication 1 ou 2, dans laquelle la ou les entités d'orientation comprennent au moins une fente, un trou ou une protubérance.

4. Billette selon la revendication 1, 2 ou 3, dans laquelle la ou les entités de localisation comprennent une rainure positionnée autour d'au moins une partie du périmètre de la billette.
